# EUROPÄISCHE PATENTSCHRIFT

(11) **EP 2 447 591 B1**
(45) Veröffentlichungstag und Bekanntmachung des Hinweises auf die Patenterteilung: **27.08.2014**
(21) Anmeldenummer: 11008357.3
(22) Anmeldetag: 18.10.2011
(51) Int. Cl.: F16T 1/20, H01M 8/04, F16T 1/22

(54) **Kondensatabscheider für Brennstoffzellensystem im Unterdruckbetrieb**
Condensate separator for fuel cell system in low pressure operation
Séparateur de condensat pour système de piles à combustible opérant à basse pression

(30) Priorität: 27.10.2010 AT 17812010
(43) Veröffentlichungstag der Anmeldung: 02.05.2012
(73) Patentinhaber: Vaillant GmbH, 42859 Remscheid (DE)
(72) Erfinder: Badenhop, Thomas, 51688 Wipperfürth (DE); Müller, Kai, 42855 Remscheid (DE)
(74) Vertreter: Hocker, Thomas

(56) Entgegenhaltungen:
- DE-A1- 10 120 018
- DE-A1-102006 054 056
- DE-A1-102007 039 564
- DE-C- 208 029
- DE-C1- 19 531 852
- GB-A- 2 276 700
- JP-A- 10 184 471

## Beschreibung

Die Erfindung betrifft einen Kondensatabscheider für ein unter Unterdruck stehendes System, bevorzugt für ein Brennstoffzellensystem.

Kondensatabscheider in Brennstoffzellensystemen werden eingesetzt, um das eventuell in dem Brennstoffzellensystem kondensierende Wasser abzuleiten. Wasser kann in einem Brennstoffzellensystem dann kondensieren, wenn Gas in einem Wärmetauscher zur Nutzung der im Brennstoffzellensystem anfallenden Wärme gekühlt wird (Kraft-Wärme-Kopplung). Dabei steht im Vordergrund, einen Gasaustausch zwischen dem Brennstoffzellensystem und der Umgebung zu verhindern, und zwar auch dann, wenn in der Brennstoffzelle ein Unterdruck herrscht.

Hierfür sind aus dem Stand der Technik verschiedene Lösungen bekannt. Dies ist beispielsweise die Kondensatableitung über Magnetventile, die das Kondensat gesteuert über zwei wechselseitig öffnende Magnetventile ableitet. Ebenfalls bekannt ist die Verwendung eines druckdichten Kondensat-Auffangbehälters mit einer Pumpe, die angesammeltes Kondensat gegen die Druckdifferenz zur Umgebung abpumpt. Diese beiden Lösungen haben den Nachteil, dass ein hoher apparativer Aufwand getrieben werden muss. Darüber hinaus besteht das Risiko von Betriebsstörungen.

Außerdem ist es bekannt, das Kondensat über einen U-förmigen Siphon abzuleiten, wobei der Druckausgleich über einen geodätischen Höhenunterschied zwischen der Zu- und Ableitung des Siphons erfolgt. Hierbei ist jedoch problematisch, dass der Höhenunterschied des Siphons nur für einen eingeschränkten Druckdifferenz-Bereich ausgelegt werden kann. Grundsätzlich muss ein Kompromiss zwischen zuverlässiger Kondensatabführung und Unempfindlichkeit gegenüber Druckschwankungen gefunden werden. Dennoch lässt sich ein Leersaugen des Siphons bei Druckstößen nie völlig ausschließen.

Andererseits ist aus der JP 10-184471 A ist ein sehr einfach und zuverlässig arbeitender Kondensatabscheider für eine Überdruckkammer bekannt. In diesem Fall ist der Kondensatabscheider vorgesehen, das an der Überdruckseite des Ansaugtrakts einer turbogeladenen Maschine am Ladeluftkühler entstehende Kondensat abzuscheiden. Dieser Kondensatabscheider weist einen zylinderförmigen Kondensatbehälter mit senkrecht ausgerichteter Zylinderachse auf, in dem ein kugelförmiger Schwimmer enthalten ist, der in einer unteren Position die Verbindung zwischen Kondensatbehälter und Umgebung beziehungsweise der Kondensatsenke sperrt. Sobald der Flüssigkeitsstand einen Mindestpegel überschreitet, schwimmt der Schwimmer auf und das Kondensat wird aufgrund des Überdrucks sowie der Schwerkraft des Kondensats in Richtung der Kondensatsenke abfließen, bis der Flüssigkeitsstand einen Mindestpegel erreicht hat und der Schwimmer wieder in die untere Position zurückfällt. Darüber hinaus kann unter bestimmten Betriebsbedingungen im Ansaugtrakt kurzzeitig ein Unterdruck herrschen. Um ein Zurückfließen des Kondensats aus dem Kondensatbehälter in den Ansaugtrakt zu vermeiden, ist weiterhin eine obere Schwimmerposition vorgesehen, in der der Schwimmer die Verbindung zwischen Kondensatbehälter und Ansaugtrakt sperrt. Sobald kein Unterdruck mehr anliegt, fällt der Schwimmer wieder in die untere Schwimmerposition zurück. Dieses System ist jedoch nicht geeignet für Systeme, die dauerhaft unter Unterdruck stehen, da dann der Schwimmer entweder permanent in der oberen Schwimmerposition verweilen würde oder, wenn man in naheliegender Weise die Masse des Schwimmers erhöht, dieser die obere Schwimmerposition nie mehr erreicht. Zudem ist die Kondensatabfuhr aus dem Kondensatbehälter nicht zuverlässig möglich, wenn in dem Kondensatbehälter ein Unterdruck herrscht.

Aus GB 2 276 700 A ist ein Kondensatabscheider mit Schwimmer bekannt, bei dem der Auslass über Federkräfte verschlossen gehalten wird. Bei Kondensatbefüllung wirkt die Auftriebskraft des Schwimmers geben die Federn bis der Auslass geöffnet wird. Ist die Flüssigkeit durch den Auslass abgeflossen, so reduziert sich die Auftriebskraft und der Auslass wird wieder durch die Federkraft verschlossen.

DE 208029 zeigt einen Kondensatabscheider mit zwei Schwimmern, die über ein Hebel- und Schiebersystem mit einem Auslassventil und einem Belüftungsventil verbunden sind.

Es ist Aufgabe der Erfindung, für permanent unter Unterdruck stehende Systeme, insbesondere für Brennstoffzellensysteme, einen einfach und kostengünstig aufgebauten, aber zuverlässig funktionierenden Kondensatabscheider bereit zu stellen.

Dies wird gemäß den Merkmalen des Anspruchs 1 dadurch gelöst, dass der Kondensatabscheider durch einen Kondensatbehälter mit einem oberen Kondensatzulauf und einem unteren Kondensatablauf gebildet wird, in dem ein Schwimmer eingeschlossen ist. Dieser Schwimmer kann sich abhängig von dem Füllgrad des Kondensatbehälters entweder in einer oberen oder in einer unteren Position befinden und verschließt entweder den oberen Kondensatzulauf oder den unteren Kondensatablauf. Eine verschließbare Öffnung erlaubt den Gasaustausch des Kondensatbehälters mit der Umgebung. Die Öffnung wirkt entweder direkt oder mittelbar in der Weise mit dem Schwimmer zusammen, dass in der oberen Position des Schwimmers, wenn der obere Kondensatzulauf verschlossen ist, die Öffnung geöffnet und der Innendruck des Kondensatbehälters auf das Niveau des Umgebungsdruckes gebracht wird. Dies erlaubt den zuverlässigen Ablauf des Kondensats über den unteren Kondensatablauf, ohne dass einströmende Umgebungsluft den Ablauf behindert. In der unteren Position des Schwimmers hingegen ist die Öffnung verschlossen.

In einer bevorzugten Ausführungsform weist der Schwimmer eine Kugelform auf, dessen Oberfläche als Verschlussfläche mit ringförmigen Dichtungen am oberen und unteren Verschluss zusammenwirkt.

In einer ebenfalls bevorzugten Ausführungsform ist der Kondensatbehälter so dimensioniert, dass die obere und die untere Position des Schwimmers relativ dicht beieinander liegen. Dadurch führt der Schwimmer nur einen sehr kleinen Hub beim Aufschwimmen von der unteren zu der oberen Schwimmerposition aus. Dieser kurze Hub zwischen Positionen hat den Vorteil, dass die Positionen in sehr kurzer Zeit gewechselt werden können. Dabei ist der Hub erfindungsgemäß nur so groß, dass sich gerade noch ein ausreichend großer Spalt zwischen Dichtfläche und Dichtung ergibt, um das Kondensat zulaufen bzw. ablaufen zu lassen.

Die Öffnung ist durch ein Belüftungsventil realisiert, das durch den Schwimmer betätigbar ist.

Der Schwimmer wirkt in der oberen Position mittels eines Kraftübertragungssystems auf das Belüftungsventil, so dass das Belüftungsventil in der oberen Position des Schwimmers geöffnet wird, also während der obere Kondensatzulauf verschlossen ist, so dass kein Gasaustausch mit dem Brennstoffzellensystem stattfindet.

In einer Variante der Erfindung ist das Kraftübertragungssystem ein Hebel, der mit dem Belüftungsventil gekoppelt ist und der von dem aufschwimmenden Schwimmer in der erfindungsgemäßen Weise betätigt wird.

In einer anderen Variante ist das Kraftübertragungssystem ein Schubelement, beispielsweise ein federbelasteter Stift, der vom Schwimmer translatorisch verschoben wird und der auf das Belüftungsventil wirkt.

In einer weiteren Variante ist das Kraftübertragungssystem eine hydraulische oder pneumatische Verbindung, wobei der Schwimmer auf einen hydraulischen oder pneumatischen Nehmer einwirkt, der hydraulisch oder pneumatisch mit einem auf das Belüftungsventil einwirkenden Geber gekoppelt ist.

Darüber hinaus wird in einer weiteren Variante der Aufenthalt des Schwimmers von einem Sensor erkannt, der das Belüftungsventil bei Anwesendheit in der oberen Position öffnet.

In einer zusätzlichen Variante wirkt der untere Verschluss gleichzeitig als Belüftungsventil, indem er beim Öffnen den Kondensatbehälter sowohl mit dem Kondensatablauf als auch über eine Belüftung mit der Umgebung verbindet. Der Vorteil dieser Variante ist der geringere Bauaufwand.

Die Gewichtskraft und Auftriebskraft des Schwimmers, die Querschnittsflächen des unteren und des oberen Verschlusses sind so auf die Drücke des (Brennstoffzellen-)Systems und der Umgebung abgestimmt, dass ein bistabiles System erreicht wird, in dem der Schwimmer ausschließlich in der unteren Position oder aber in der oberen Position eine stabile Lage einnimmt. Dies stellt sicher, dass sich der Schwimmer nur kurzzeitig in einer Lage zwischen diesen Positionen befindet. Dabei sind die Verhältnisse so dimensioniert, dass Übergang des Schwimmers nach Ablauf des Kondensats von der oberen Position in die untere Position eine Restmenge Kondensat im Kondensatbehälter verbleibt, so dass während des Übergangs keine Luft von der Umgebung in das Brennstoffzellensystem einströmt. Um dies zu erreichen, sind bevorzugt die pneumatischen Kräfte, die auf den Schwimmer wirken, so abgestimmt, dass ein sicheres Öffnen und wieder Verschließen der unteren Öffnung des Kondensatbehälters sichergestellt ist. Dies ist einerseits dann der Fall, wenn das Verhältnis aus der pneumatische Kraft am unteren Verschluss und der pneumatischen Kraft am oberen Verschluss größer als 2 ist. Dabei berechnet sich die pneumatische Kraft am unteren Verschluss aus dem Produkt vom Umgebungsdruck der Umgebung und von der Querschnittsfläche des unteren Verschlusses. Die pneumatische Kraft am oberen Verschluss berechnet sich aus dem Produkt vom Druck des mit Unterdruck beaufschlagten Systems und von der Querschnittsfläche des oberen Verschlusses.

Andererseits ist ein sicheres Ablösen des Schwimmers vom oberen Verschluss erforderlich. Dies ist gewährleistet, wenn die Gewichtskraft des Schwimmers größer ist als die pneumatische Kraft am oberen Verschluss.

In einer alternativen Ausführungsform ist der Schwimmer mit einem Hebel verbunden, welcher wiederum auf den oberen und unteren Verschluss und das Belüftungsventil einwirkt. Dadurch wird die doppelte Funktion des Schwimmers, nämlich den Füllstand des Kondensats zu ermitteln und den oberen und unteren Verschluss unmittelbar zu verschließen, entkoppelt. Dazu schließt der Hebel in der unteren Position des Schwimmers den unteren Verschluss und das Belüftungsventil und öffnet den oberen Verschluss. In der oberen Position des Schwimmers öffnet der Hebel den unteren Verschluss und das Belüftungsventil und schließt den oberen Verschluss. Dies kann beispielsweise durch Ventile erfolgen, die vom Hebel angesteuert werden. Bevorzugt ist in der Verbindung zwischen dem Schwimmer und den Verschlüssen oder Ventilen eine Hysterese vorgesehen. Diese Hysterese verhindert, dass der Schwimmer in einer mittleren Position verharrt. Statt dessen kann der Schwimmer aufgrund der Hysterese periodisch zwischen der oberen und der unteren Position wechseln.

In einer bevorzugten Variante wird der obere Verschluss und das Belüftungsventil in einem 3-Wege-Ventil realisiert, bei dem der Kondensatbehälter wechselseitig mit dem Brennstoffzellensystem oder mit der Umgebung verbunden ist.

Die Erfindung wird nun anhand der Figuren detailliert erläutert.

Es stellen dar:
- Figur 1:: Einen erfindungsgemäßen Kondensatabscheider
- Figur 2:: Eine Ausführungsvariante des Kondensatabscheiders aus Figur 1
- Figur 3:: Eine weitere Ausführungsvariante des Kondensatabscheiders aus Figur 1
- Figur 4:: Eine alternative Ausführungsform des Kondensatabscheiders

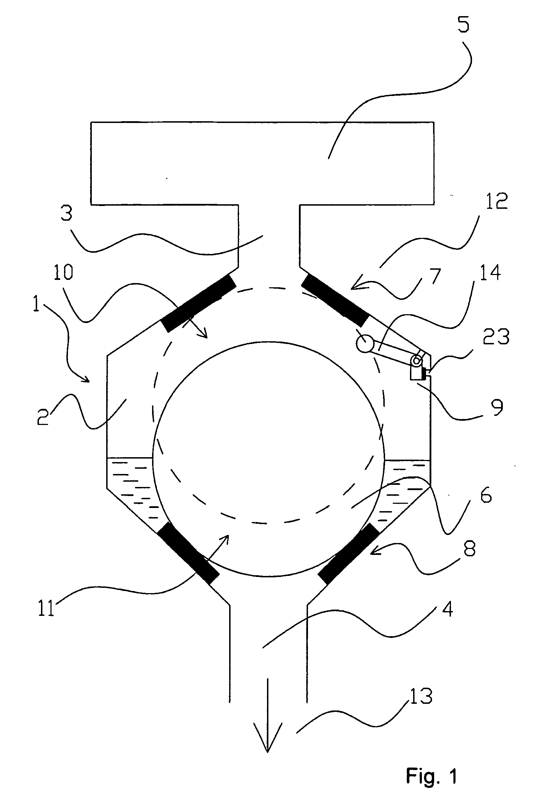

Figur 1 zeigt ein erfindungsgemäßer Kondensatabscheider 1 im Schnitt dargestellt. Von einem unter Unterdruck stehendes System, insbesondere von einem Brennstoffzellensystem 5 läuft Kondensat über den Kondensatzulauf 3 dem Kondensatabscheider 1 zu. Der Kondensatabscheider 1 besteht aus einem Kondensatbehälter 2 zur temporären Aufnahme von Kondensat, einem darin eingeschlossenen Schwimmer zur Erfassung der Füllmenge des Kondensatbehälters, einem oberen Verschluss 7, der den Kondensatbehälter verschließbar mit dem Kondensatzulauf 3 verbindet, einem unteren Verschluss 8, der den Kondensatbehälter 2 verschließbar mit einem zur einer Kondensatsenke 13 führenden Kondensatablauf 4 verbindet. Der Schwimmer 6 nimmt bei entleertem Kondensatbehälter 2 eine untere Position 11 ein. Dabei liegt der hier als Kugel ausgeführte Schwimmer im Bereich des unteren Verschlusses 8 auf einer ringförmigen Dichtung auf und verschließt so die Verbindung zum Kondensatablauf 4. Das Gewicht des Schwimmers ist dabei so bemessen, dass der Schwimmer durch die aus der Differenz zwischen Umgebungsdruck der Umgebung 12 und den im Brennstoffzellensystem 5 und damit auch im Kondensatbehälter 2 herrschenden Unterdruck resultierende Druckkraft nicht angehoben wird. Durch sich im Kondensatbehälter 2 sammelndes Kondensat steigt der Flüssigkeitsspiegel im Kondensatbehälter 2 an, bis der Schwimmer aufgrund der zunehmenden Verdrängung aufschwimmt. Durch das nun auch unterhalb des Schwimmers wirkende Kondensat erhält der Schwimmer zusätzlichen Auftrieb, so dass er die stabile Lage in der unteren Position 11 verlässt und zu der oberen Position 12 aufschwimmt, wo er eine zweite stabile Lage einnimmt. Die Masse und das Volumen des Schwimmers und die Querschnittsfläche des unteren Verschlusses 8 sind abhängig vom Unterdruck so aufeinander abgestimmt, dass die Lage des Schwimmers 6 in jedem Fall bistabil ist. Der Weg zwischen der unteren Position 11 und der oberen Position 12 ist dabei sehr kurz, bevorzugt kleiner als der halbe Durchmesser des Schwimmers 6, so dass die obere Position 12 in sehr kurzer Zeit eingenommen wird. In der oberen Position 12 verschließt der Schwimmer 6 den oberen Verschluss 7. Der untere Verschluss ist nun geöffnet. Aufgrund der Druckdifferenz zwischen der Kondensatsenke 13 und dem Kondensatbehälter 2, der sich auf dem Druckniveau des Brennstoffzellensystems 5 befindet, fließt das Kondensat nicht zuverlässig ab. Insbesondere bei einem langen Kondensatablauf 4 ergibt sich das Problem, dass Luftblasen im dem Kondensatablauf 4 aufsteigen und den Ablauf des Kondensates behindern. Um dies zu verhindern ist eine Öffnung 23, hier dargestellt durch ein Belüftungsventil 9 vorgesehen. Während der Schwimmer 6 in der oberen Position 12 ist, wird gleichzeitig das Belüftungsventil 9 geöffnet. Hierzu ist das Belüftungsventil 9 mit einem Kraftübertragungssystem 14 verbunden, das die Bewegung des Schwimmers 6 in der Weise auf das Belüftungsventil 9 überträgt, dass es in der oberen Position 12 des Schwimmers öffnet. Das Kraftübertragungssystem 14 ist in dem Beispiel in Figur 1 als Hebel ausgeführt, gegen dessen Hebalarm der aufschwimmende Schwimmer 6 erfindungsgemäß wirkt. Dieser Hebel ist stellvertretend für andere Mechanismen, beispielsweise für einen Schieber, der von dem Schwimmer 6 beim Aufschwimmen nach oben geschoben wird und der das Belüftungsventil öffnet.

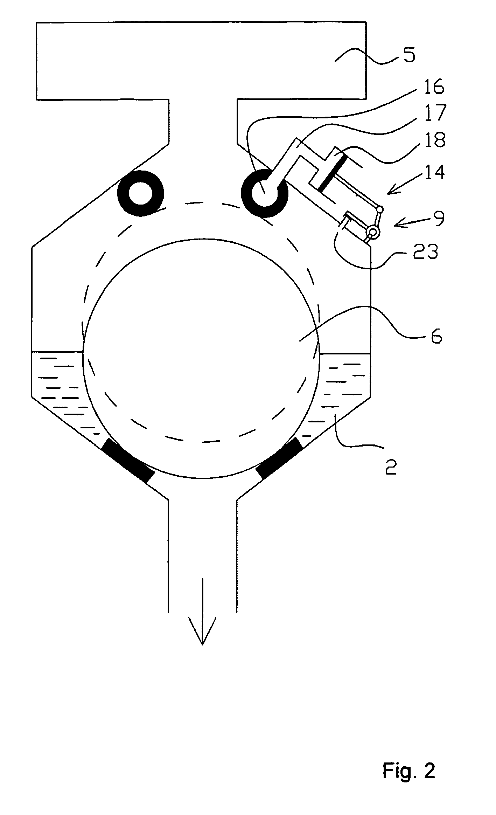

In Figur 2 ist eine alternative Ausführungsform des Kraftübertragungssystems 14 dargestellt. Hier basiert das Kraftübertragungssystem auf einer hydraulischen oder pneumatischen Kopplung, wobei der Nehmer mit dem Schwimmer zusammenwirkt und der Geber auf das Belüftungsventil 9 wirkt. In dem Ausführungsbeispiel ist die an dem oberen Verschluss 7 vorgesehene Dichtung in Form eines torusförmigen elastischen Hohlkörpers als Nehmer ausgebildet. Andere aequivalent wirkende Mittel, beispielsweise mit einem separaten Nehmer sind stellvertretend mit eingeschlossen.

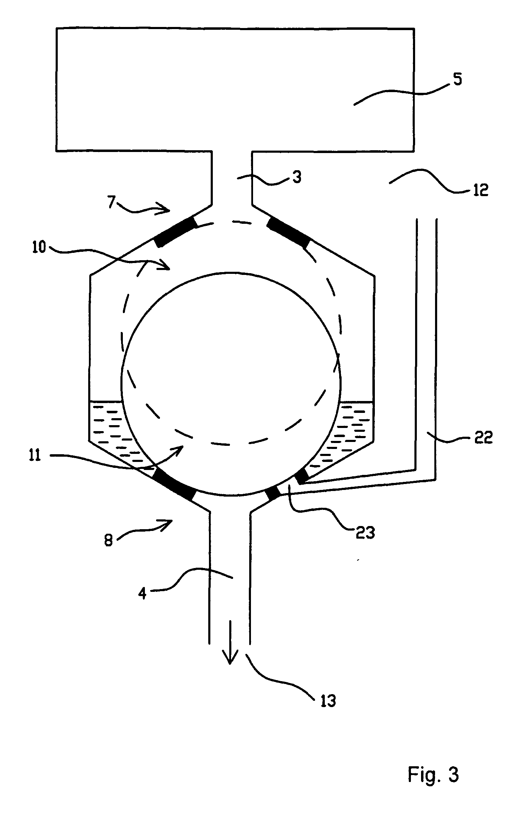

In Figur 3 ist eine weitere Ausführungsvariante des Kondensatabscheiders 1 vorgesehen. Im Unterschied zu Figur 1 verschließt hier der untere Verschluss zugleich die Öffnung 23. Um ein austreten des Kondensats an der Öffnung 23 zu verhindern, ist eine Belüftung 22 an der Öffnung 23 angeschlossen. Ein stetiges Gefälle in Richtung des Kondensatbehälters 2 sowie das Ende der Belüftung 22 oberhalb des maximal zu erwartenden Kondensat-Pegels stellt sicher, dass kein Kondensat in die Belüftung 22 läuft. Solange der Schwimmer sich in der unteren Position 11 befindet, ist die Öffnung 23 mit durch den unteren Verschluss 8 verschlossen. Sobald der Schwimmer wie in der Beschreibung zu Figur 1 beschrieben aufschwimmt, strömt dem Kondensatbehälter 2 Luft aus der Umgebung 12 zu, so dass das Kondensat, nachdem sich ein Druckausgleich eingestellt hat, über den Kondensatablauf 4 abläuft. Dabei strömt über die Belüftung 22 stetig Luft nach. Es wird zwar im Bereich des unteren Verschlusses 8 zu einer Überkreuzung des Luft- und Kondensatstromes und damit zu einer Blasenbildung kommen. Da der Querschnitt aber in diesem Bereich gegenüber dem Kondensatablauf 4 vergrößert ist, führt dies nicht zu einer Behinderung des Kondensatablaufes. Erfindungsgemäß kann die Öffnung 23 auch unterhalb des Verschlusses 8 am Kondensatbehälter 2 vorgesehen sein.

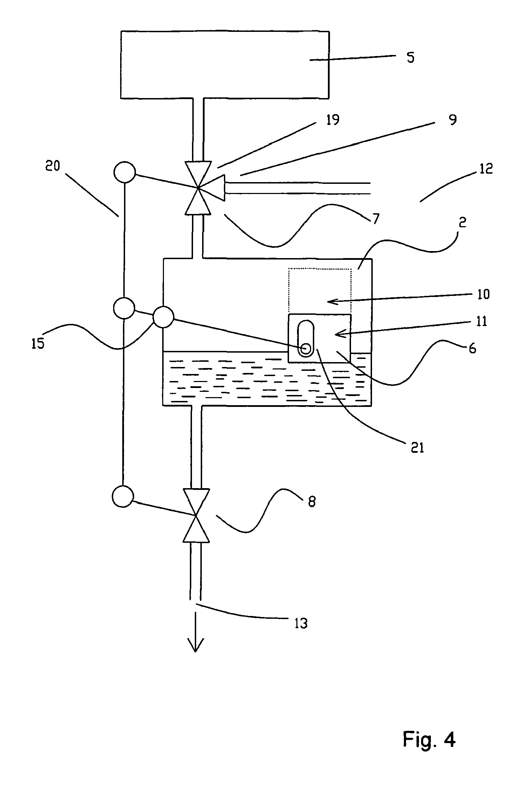

Figur 4 stellt eine alternative Ausführungsform des Kondensatabscheiders 1 dar. Der obere und der untere Verschluss 7, 8 wird hier durch je ein separates Ventil gebildet. Diese Variante bietet die Möglichkeit, den oberen Verschluss 7 mit dem Belüftungsventil 9 zu einem 3-Wege-Ventil 19 zusammenzufassen. Ein Hebel 15 und eine Koppelung 20 verbindet den Schwimmer in der Weise mit den Verschlüssen und/oder Ventilen, dass die erfindungsgemäße Funktion erfüllt wird. Solande sich der Schwimmer in der unteren Position 11 befindet, sind der untere Verschluss 8 und das Belüftungsventil 9 verschlossen und der obere Verschluss 7 geöffnet. Sobald der Schwimmer 6 die obere Position 10 erreicht, sind der untere Verschluss 8 und das Belüftungsventil 9 geöffnet und der obere Verschluss 7 geöffnet. Wenn der obere Verschluss 7 und das Belüftungsventil 9 zu einem 3-Wege-Ventil 19 zusammengefasst ist, wird der Kondensatbehälter 2 in der unteren Stellung 11 des Schwimmers mit dem Brennstoffzellensystem 5 und in der oberen Stellung 10 des Schwimmers mit der Umgebung 12 verbinden, während in beiden Stellungen des Schwimmers die jeweils andere Verbindung gesperrt ist. Die Verbindung 21 zwischen Schwimmer 6 und Hebel 15 weist ein Spiel auf. Dadurch wird eine Hysterese gebildet, die dazu führt, dass auch bei Stellungen des Schwimmers 6 zwischen der unteren und der oberen Stellung 11, 10 sich der Hebel 15 ausschließlich in Stellungen befindet, die der unteren oder der oberen Stellung 11, 10 des Schwimmers 6 entsprechen.

### Bezugszeichenliste

- 1: Kondensatabscheider
- 2: Kondensatbehälter
- 3: Kondensatzulauf
- 4: Kondensatablauf
- 5: Brennstoffzellensystem
- 6: Schwimmer
- 7: oberer Verschluss
- 8: unterer Verschluss
- 9: Belüftungsventil
- 10: obere Position
- 11: untere Position
- 12: Umgebung
- 13: Kondensatsenke
- 14: Kraftübertragungssystem
- 15: Hebel
- 16: Nehmer
- 17: Leitung
- 18: Geber
- 19: 3-Wege-Ventil
- 20: Koppelung
- 21: Verbindung
- 22: Belüftung
- 23: Öffnung

## Patentansprüche

1. Kondensatabscheider (1) für ein bevorzugt mit Unterdruck beaufschlagtes System, insbesondere für ein Brennstoffzellensystem (5), mit einem Kondensatbehälter (2), mit einem Kondensatzulauf (3) im oberen Bereich des Kondensatbehälters, mit einem Kondensatablauf (4) im unteren Bereich des Kondensatbehälters (2), mit einem Schwimmer (6) innerhalb des Kondensatbehälters (2), wobei sich der Schwimmer zwischen einer oberen Position (10), die mit einem hohen Füllstand des Kondensatbehälters (2) korrespondiert, und einer unteren Position (11), die mit einem niedrigen Füllstand des Kondensatbehälter (2) korrespondiert, bewegen kann, mit einem oberen Verschluss (7), der in der oberen Position (10) des Schwimmers (6) die Verbindung zwischen dem Kondensatzulauf (3) und dem Kondensatbehälter (2) sperrt und mit einem unteren Verschluss (8), der in der unteren Position (11) des Schwimmers (6) die Verbindung zwischen dem Kondensatablauf (3) und dem Kondensatbehälter (2) sperrt, **dadurch gekennzeichnet, dass** der Schwimmer (6) die Form einer Kugel aufweist und dass der obere und/oder untere Verschluss (7, 8) durch von ringförmigen Dichtungen umschlossene Öffnungen gebildet werden, die durch den Schwimmer (6) verschlossen werden und der Kondensatbehälter (2) eine verschließbare Öffnung (23) mit Belüftungsventil (9) aufweist, die eine Verbindung zu der Umgebung (12) herstellt, wobei das Belüftungsventil (9) mit einem Kraftübertragungssystem (14) verbunden ist das die Bewegung des Schwimmers (6) in der Weise auf das Belüftungsventil (9) überträgt, dass es in der oberen Position (12) des Schwimmers (6) öffnet oder der Schwimmer (6) in der unteren Position (11) die Öffnung (23) verschließt.

2. Kondensatabscheider nach Anspruch 1, **dadurch gekennzeichnet, dass** das Verhältnis aus dem Abstand zwischen der oberen Position (10) und der unteren Position (11) des Schwimmers und dem Durchmesser des Schwimmers (6) kleiner als 1, bevorzugt keiner als 0,5 ist.

3. Kondensatabscheider nach einem der vorhergehenden Ansprüche, **dadurch gekennzeichnet, dass** die Öffnung (23) in der unteren Position (11) des Schwimmers (6) durch ein Belüftungsventil (9) verschlossen ist.

4. Kondensatabscheider nach einem der vorhergehenden Ansprüche, **dadurch gekennzeichnet, dass** die Auftriebskraft des Schwimmers (6) in der oberen Position (10) in der Weise auf eine Kraftübertragungssystem (14) wirkt, dass das Belüftungsventil (9) geöffnet wird.

5. Kondensatabscheider nach Anspruch 4, **dadurch gekennzeichnet, dass** das Kraftübertragungssystem (14) ein mit dem Belüftungsventil (9) verbundener Hebel ist.

6. Kondensatabscheider nach Anspruch 4, **dadurch gekennzeichnet, dass** das Kraftübertragungssystem (14) ein mit dem Belüftungsventil (9) verbundenes Schubelement ist.

7. Kondensatabscheider nach Anspruch 4, **dadurch gekennzeichnet, dass** das Kraftübertragungssystem (14) eine hydraulische oder pneumatische Verbindung ist.

8. Kondensatabscheider nach einem der Ansprüche 1 bis 3, **dadurch gekennzeichnet, dass** ein Sensor vorgesehen ist, der den Schwimmer (6) in der oberen Position (10) sensiert und das Öffnen des Belüftungsventils (9) bewirkt.

9. Kondensatabscheider nach einem der Ansprüche 1 oder 2, **dadurch gekennzeichnet, dass** der untere Verschluss (8) in der unteren Position (11) des Schwimmers zugleich die Öffnung (23) verschließt.

10. Kondensatabscheider nach einem der vorhergehenden Ansprüche, **dadurch gekennzeichnet, dass** der Quotient aus dem Produkt vom Umgebungsdruck der Umgebung (12) und von der Querschnittsfläche des unteren Verschlusses (8) und dem Produkt vom Druck des mit Unterdruck beaufschlagtes Systems (5) und von der Querschnittsfläche des oberen Verschlusses (7) größer 2 ist.

11. Kondensatabscheider nach einem der vorhergehenden Ansprüche, **dadurch gekennzeichnet, dass** die Gewichtskraft des Schwimmers (11) größer als das Produkt vom Druck des mit Unterdruck beaufschlagtes Systems (5) und von der Querschnittsfläche des oberen Verschlusses (7) ist.

## Claims

1. Condensate separator (1) for a system preferably in a vacuum, in particular for a fuel cell system (5), having a condensate container (2), having a condensate feed (3) in the upper region of the condensate container, having a condensate drain (4) in the lower region of the condensate container (2), having a float (6) inside the condensate container (2), wherein the float can move between an upper position (10), which corresponds to a high filling level of the condensate container (2), and a lower position (11), which corresponds to a low filling level of the condensate container (2), having an upper shutter (7), which blocks the connection between the condensate feed (3) and the condensate container (2) in the upper position (10) of the float (6), and having a lower shutter (8), which blocks the connection between the condensate drain (3) and the condensate container (2) in the lower position (11) of the float (6), **characterised in that** the float (6) has the shape of a sphere and that the upper and/or lower shutter (7, 8) is formed by openings surrounded by annular seals, which are closed by the float (6), and the condensate container (2) has a closable opening (23), preferably having a ventilation valve (9), which produces a connection to the surroundings (12), wherein the ventilation valve (9) is connected to a force transmission system (14), which transfers the movement of the float (6) to the ventilation valve (9), in such a way that it opens in the upper position (12) of the float (6) or the float (6) closes the opening in the lower position (11).

2. Condensate separator according to claim 1, **characterised in that** the ratio of the distance between the upper position (10) and the lower position (11) of the float and the diameter of the float (6) is smaller than 1, preferably smaller than 0.5.

3. Condensate separator according to one of the preceding claims, **characterised in that** the opening (23) is closed by a ventilation valve (9) in the lower position (11) of the float (6).

4. Condensate separator according to one of the preceding claims, **characterised in that** the buoyancy of the float (6) in the upper position (10) affects a force transmission system (14), in such a way that the ventilation valve (9) is opened.

5. Condensate separator according to claim 4, **characterised in that** the force transmission system (14) is a lever that is connected to the ventilation valve (9).

6. Condensate separator according to claim 4, **characterised in that** the force transmission system (14) is a sliding element that is connected to the ventilation valve (9).

7. Condensate separator according to claim 4, **characterised in that** the force transmission system (14) is a hydraulic or pneumatic connection.

8. Condensate separator according to one of claims 1 to 3, **characterised in that** a sensor is provided, which senses the float (6) in the upper position (10) and effects the opening of the ventilation valve (9).

9. Condensate separator according to one of claims 1 or 2, **characterised in that** the lower shutter (8) closes the opening (23) in the lower position (11) of the float at the same time.

10. Condensate separator according to one of the preceding claims, **characterised in that** the ratio of the product of the ambient pressure of the surroundings (12) and of the cross-sectional area of the lower shutter (8) and the product of the pressure of the system (5) in a vacuum and of the cross-sectional area of the upper shutter (7) is greater than 2.

11. Condensate separator according to one of the preceding claims, **characterised in that** the weight force of the float (11) is greater than the product of the pressure of the system (5) in a vacuum and of the cross-sectional area of the upper shutter (7).

## Revendications

1. Séparateur de produit de condensation (1) pour un système alimenté par dépression de préférence, notamment pour un système à cellules électrochimiques (5), doté d'un réservoir de produit de condensation (2), d'une arrivée pour le produit de condensation (3) située dans la partie supérieure du réservoir de produit de condensation (2), d'une évacuation du produit de condensation (4) située dans la partie inférieure du réservoir de produit de condensation (2), d'un flotteur (6) situé dans le réservoir de produit de condensation (2), le flotteur pouvant se déplacer entre une position haute (10), qui correspond à un niveau élevé du réservoir de produit de condensation (2), et une position basse (11), qui correspond à un niveau faible du réservoir de produit de condensation (2), d'un bouchon (7) placé en haut, qui bloque le passage entre l'arrivée du produit de condensation (3) et le réservoir de produit de condensation (2) lorsque le flotteur (6) est en position haute (10) et d'un bouchon (8) placé en bas, qui bloque le passage entre l'évacuation du produit de condensation (3) et le réservoir de produit de condensation (2) lorsque le flotteur (6) est en position basse (11), **caractérisé en ce que** le flotteur (6) a la forme d'une boule et **en ce que** les bouchons (7, 8) placés en haut et/ou en bas sont formés par des ouvertures entourées de joints circulaires, qui sont fermées par le flotteur (6) et le réservoir de produit de condensation (2) présente une ouverture (23) refermable de préférence avec une soupape de ventilation (9), laquelle permet un passage vers le milieu, la soupape de ventilation (9) étant reliée à un système de transmission d'énergie (14) qui transmet le mouvement du flotteur (6) à la soupape de ventilation (9) de manière à ce qu'elle s'ouvre lorsque le flotteur (6) est en position haute (12) ou que le flotteur (6) ferme l'ouverture (23) lorsqu'il est en position basse (11).

2. Séparateur de produit de condensation selon la revendication 1, **caractérisé en ce que** le rapport de l'écart entre la position haute (10) et la position basse (11) du flotteur et du diamètre du flotteur (6) est inférieur à 1, de préférence inférieur à 0,5.

3. Séparateur de produit de condensation selon l'une quelconque des revendications précédentes, **caractérisé en ce que** l'ouverture (23) est fermée par une soupape de ventilation (9) lorsque le flotteur (6) est en position basse (11).

4. Séparateur de produit de condensation selon l'une quelconque des revendications précédentes, **caractérisé en ce que** la force ascensionnelle du flotteur (6) en position haute (10) agit sur un système de transmission d'énergie (14) de manière à ce que la soupape de ventilation (9) soit ouverte.

5. Séparateur de produit de condensation selon la revendication 4, **caractérisé en ce que** le système de transmission d'énergie (14) est un levier relié à la soupape de ventilation (9).

6. Séparateur de produit de condensation selon la revendication 4, **caractérisé en ce que** le système de transmission d'énergie (14) est un élément de poussée relié à la soupape de ventilation (9).

7. Séparateur de produit de condensation selon la revendication 4, **caractérisé en ce que** le système de transmission d'énergie (14) est une liaison hydraulique ou pneumatique.

8. Séparateur de produit de condensation selon l'une quelconque des revendications 1 à 3, **caractérisé en ce qu'**un capteur, qui détecte lorsque le flotteur (6) est en position haute (10) et entraîne l'ouverture de la soupape de ventilation (9), est prévu.

9. Séparateur de produit de condensation selon l'une quelconque des revendications 1 ou 2, **caractérisé en ce que** le bouchon (8) ferme également l'ouverture (23) lorsque le flotteur est en position basse (11).

10. Séparateur de produit de condensation selon l'une quelconque des revendications précédentes, **caractérisé en ce que** le quotient issu du produit de la pression ambiante du milieu (12) et de l'aire de la section du bouchon inférieur (8) et du produit de la pression du système alimenté par dépression (5) et de l'aire de la section du bouchon supérieur (7) est supérieur à 2.

11. Séparateur de produit de condensation selon l'une quelconque des revendications précédentes, **caractérisé en ce que** le poids du flotteur (11) est supérieur au produit de la pression du système alimenté par dépression (5) et de l'aire de la section du bouchon supérieur (7).
